# EUROPÄISCHE PATENTSCHRIFT

(11) **EP 2 025 583 B1**
(45) Veröffentlichungstag und Bekanntmachung des Hinweises auf die Patenterteilung: **22.06.2011**
(21) Anmeldenummer: 08009887.4
(22) Anmeldetag: 30.05.2008
(51) Int. Cl.: B62D 33/04

(54) **Fahrzeugaufbau für beispielsweise Kühlfahrzeuge**
Vehicle superstructure for refrigerated vehicles for instance
Structure de véhicule pour véhicule réfrigérant, par exemple

(30) Priorität: 13.08.2007 DE 102007038103
(43) Veröffentlichungstag der Anmeldung: 18.02.2009
(73) Patentinhaber: Fahrzeugwerk Bernard Krone GmbH, 48480 Spelle (DE)
(72) Erfinder: Krone, Bernard, 48480 Spelle (DE); Stegemann, Ralf, 48429 Rheine (DE); Sasse, Uwe, 49716 Meppen (DE); Möhlenkamp, Wilhelm, 49757 Werlte (DE); Nordhoff, Frank, 27612 Loxstedt (DE)
(74) Vertreter: Pott, Ulrich

(56) Entgegenhaltungen:
- EP-A2- 1 375 312
- DE-A1- 1 630 595
- DE-A1- 10 141 383
- DE-U1- 8 617 229
- GB-A- 2 023 700

## Beschreibung

Die Erfindung bezieht sich auf einen Fahrzeugaufbau für beispielsweise Kühlfahrzeuge mit einem von Wandungen, einem Dach und einem Boden umgrenzten Laderaum, wobei die Wandungen mehrere metallische, miteinander verbundene Wandungsteile umfassen, die gefalzte Seitenrandbereiche zur Verbindung von benachbarten Wandungsteilen umfassen und wobei einander benachbarte Wandungsteile gegensinnig abgewinkelte, Aufnahmetaschen bildende Seitenrandbereiche haben, die abgewinkelten Enden der Seitenrandbereiche jeweils wechselseitig klammerartig in die jeweilige Aufnahmetasche des anderen Wandungsteils greifen, die Aufnahmetasche mitsamt dem abgewinkelten Ende eines Wandungsteils sich oberhalb einer Wandungsteilebene des anderen Wandungsteils aber parallel zu dieser erstreckt und die andere Wandungsteilebene des anderen Wandungsteils in etwa bis an die benachbarte Wandungsebene des benachbarten Wandungsteils reicht. Fahrzeugaufbauten der vorgenannten Art mit mit einer Falzung versehenen Seitenrandbereichen von Wandungsteilen sind in unterschiedlicher Gestaltung bekannt. So ist beispielsweise bekannt, die Seitenrandbereiche um 90° abzuwinkeln, so dass die um 90° abgewinkelten Seitenrandbereiche benachbarter Wandungsteile parallel aneinander liegen und zur Verbindung dieser Wandungsteile von einer im Querschnitt im Wesentlichen U-förmigen Klammer zu umgreifen sind.

Nachteilig bei diesen vorgenannten konstruktiven Gestaltungen der Wandung eines Fahrzeugaufbaus ist, dass diese Verbindung z.B. bei der Innenwandung eines Laderaumes an der dem Laderaum abgewandten Wandungsebene vorgesehen ist und insbesondere im Falle eines Fahrzeugaufbaus für Kühlfahrzeuge diese Wandungsteilverbindung in den Raum ragt, in dem die Dämmmaterialien vorzusehen sind. Aufgrund der Größe der Verbindung ist die Dämmmaterialschicht erheblich und insofern die Isolierfähigkeit der Wandung geschwächt. Zudem besteht aufgrund der dort vorgesehenen Klammern und der relativ tiefen Erstreckung der Verbindungselemente in den Dämmmaterialbereich hinein die Gefahr, dass das Dämmmaterial beschädigt wird. Nachteilig bei diesen bekannten Verbindungstechniken ist auch, dass über die Nahtstellen bzw. über die Zwischenspalte zwischen den benachbarten Wandungsteilen keine übergreifende Befestigungselemente wie Zurrschienen eingesetzt werden können, so dass die Befestigungselemente sich allenfalls in Wandungsteilen zwischen benachbarten Verbindungsstellen erstrecken können. Darüber hinaus können sich an den Klammerteilen Verunreinigungen festsetzen, was insbesondere bei Kühlfahrzeugen, die für den Lebensmitteltransport eingesetzt werden, mit Risiken verbunden ist.

Aus dem DE 86 17 229 U1 ist ein Fahrzeugaufbau der eingangs genannten Art bekannt, bei dem einander benachbarte Wandungsteile durch gegensinnig abgewinkelte, Aufnahmetaschen bildende Seitenrandbereiche miteinander verbunden sind, wobei die abgewinkelten Enden der Seitenrandbereiche jeweils wechselseitig klammerartig in die jeweilige Aufnahmetasche des anderen Wandungsteils greift. Die Aufnahmetasche mitsamt dem abgewinkelten Ende eines Wandungsteils erstreckt sich oberhalb einer Wandungsteilebene des anderen Wandungsteils aber parallel zu dieser, wobei die andere Wandungsteilebene des anderen Wandungsteils in etwa bis an die benachbarte Wandungsebene des benachbarten Wandungsteils reicht. Diese Art der Verbindung sorgt dafür, dass die metallischen Wandungsteile über eine flachbauende Verbindung aneinander festzulegen sind. Nachteilig hierbei ist, dass bei dem Vorsehen von Befestigungselementen wie beispielsweise Zurrschienen zur Ladungsgutsicherung sich diese auf der Innenwandung zu erstrecken haben und in den Laderaum ragen. Zudem bereitet die Befestigung derartiger Zurrschienen an den Innenwandungsteilen Probleme.

Es ist daher Aufgabe der vorliegenden Erfindung, einen Fahrzeugaufbau der eingangs genannten Art derart weiterzubilden, dass benachbarte Wandungteile sicher aneinander zu befestigen sind, jedoch hinterlegtes Dämmmaterial nur wenig beeinträchtigt ist. Zudem soll die Verbindung einander benachbarter Wandungsteile so beschaffen sein, dass auch relativ lange Befestigungselemente zur Sicherung von Ladungsgut vorzusehen sind. Diese Befestigungselemente sollen darüber hinaus auch sicher so vorgesehen werden können, dass diese den Laderaum so wenig wie möglich beeinträchtigen und darüber hinaus, dass sich diese auch über Verbindungsbereiche von einander benachbarten Wandungsteilen erstrecken können.

Zur Lösung dieser Aufgabe zeichnet sich der Fahrzeugaufbau der eingangs genannten Art dadurch aus, dass einander benachbarte Wandungsteile zur Anordnung von Laderaumbefestigungselementen wie beispielsweise Zurrschienen in einem die abgewinkelten Enden der Seitenwandbereiche und die Aufnahmetaschen umfassenden Wandungsbereiche derart verformt sind, dass die Ladungsbefestigungselemente im Wesentlichen flächenbündig zu der dem Laderaum zugewandten Wandungsebene der Wandungsteile verlaufen.

Damit ist ein Fahrzeugaufbau zur Verfügung gestellt, bei dem die Verbindung von benachbarten metallischen Wandungsteilen weiterhin außerordentlich flach baut und keine zu hinterlegtem Dämmmaterial zugewandte Spitzen hat, sondern sich flächenbündig und parallel zu den zu hinterlegenden Dämmmaterialien hin gewandten Wandungsebenen erstreckt, so dass sich keinerlei Risiken darbieten, dass durch die Verbindungsstelle das Wandungsmaterial durch abstehende Wandungsteilbereiche aufgeschlitzt wird. Gleichwohl ist durch die Verformung der Wandungsbereiche der Raum geschaffen, um die Ladungsbefestigungselemente aufzunehmen, so dass diese nicht mehr in den Laderaum hineinragen. Durch die Verformung über den Verbindungsbereich hinausgehende Verformung ist darüber hinaus auch eine Aussteifung der Wandungsteile und der Verbindungsbereiche erreicht, die durch das Einsetzen eines Ladungsbefestigungselementes noch verbessert wird.

Zur Lösung dieser Aufgabe zeichnet sich der Fahrzeugaufbau der eingangs genannten Art dadurch aus, daß einander benachbarte Wandungsteile gegensinnig abgewinkelte, Aufnahmetaschen bildende Seitenrandbereiche haben, wobei die abgewinkelten Enden der Seitenrandbereiche jeweils wechselseitig klammerartig in die jeweilige Aufnahmetasche des anderen Wandungsteils greift und die Aufnahmetasche mitsamt dem abgewinkelten Ende eines Wandungsteils sich oberhalb einer Wandungsteilebene des anderen Wandungsteils aber parallel zu dieser erstreckt und die andere Wandungsteilebene des anderen Wandungsteils in etwa bis an die benachbarte Wandungsebene des benachbarten Wandungsteils reicht.

Damit ist ein Fahrzeugaufbau zur Verfügung gestellt, bei dem die Verbindung von benachbarten metallischen Wandungsteilen außerordentlich flach baut, und keine zu hinterlegtes Dämmaterial gewandte Spitzen hat, sondern sich flachbündig und parallel zu den zu hinterlegenden Dämmaterialien hingewandten Wandungsebenen erstreckt. Damit bieten sich keinerlei Risiken, daß durch die Verbindungsstelle das Wandungsmaterial durch abstehende Wandungsteilbereiche aufschlitzt.

Durch die flache Bauweise ist das Dämmaterial in den Nahtstellen der Verbindungsstellen kaum geschwächt, so daß eine optimale Dämmwirkung auch in diesen Bereichen zu erzielen ist. Zudem ist der Aufwand für die Herstellung einer derartigen Falzung gering. Diese kann vor der Verbindung der Wandungsteile vorgesehen werden, indem die Enden gegensinnig abgewinkelt werden durch eine entsprechende Falzung, also um 180°, und mit einem entsprechenden Abstandsmaß umgelegt werden, wobei die eine noch eine Ausbuchtung erhält, so daß sich das abgewinkelte Ende in etwa parallel zu der Wandungsebene erstreckt, die dem Laderaum zugewandt ist. Dadurch sind Klammern geschaffen, die ineinandergreifen und durch Pressen oder Rollen in ihre endgültige Form zu bringen sind.

Um eine optimale Verbindung zu schaffen, ist bevorzugtermaßen vorgesehen, daß vor der Verbindung die Taschen mit einer Klebermasse oder einer Dichtungsmasse befüllt werden. Aufgrund der taschenförmigen Form kann die entsprechende Klebermasse bzw. die entsprechende Dichtmasse dort sicher eingefüllt werden, wobei durch ein entsprechendes Maß der Aufnahmetasche im Hinblick auf die Materialstärke des abgewinkelten Ende des anderen Wandungsteils die Tasche vollständig auszufüllen ist und somit die abgewinkelten Enden des anderen Teiles optimal mit der Kleber- bzw. Dichtungsmasse in Berührung kommen. Damit ist eine hochfeste Verbindung von Wandungsteilen zu schaffen, die in einer Richtung parallel zur Fahrtrichtung eines späteren Fahrzeugs bei orthogonal zu dieser Fahrtrichtung verlaufenden Längsachsen der Wandungsteile eine auf Zug aber auch Druck beanspruchte Verbindung durch die abgewinkelten Enden haben und die Klebemasse auch in Längsrichtung der Wandungsteile eine hochfeste Verbindung sicherstellen kann.

Aufgrund der nur geringen Dicke dieser Verbindung ist diese Verbindung auch geeignet, mitverformt zu werden, um beispielsweise Ladungsbefestigungselemente aufzunehmen, die zum Laderauminneren hin im wesentlichen flächenbündig mit der dem Laderaum zugewandten Wandungsebene der Wandungsteile abschließen.

Damit sind nicht nur Ladungsbefestigungselemente wie Zurrschienen vorzusehen, die zwischen Nahtstellen bzw. Verbindungsstellen einander benachbarter Wandungsteile vorzusehen sind. Vielmehr sind hier auch z.B. Zurrschienen einzusetzen, die sich über die Nahtstellen benachbarter Wandungsteile erstrecken.

Wesentliche weitere Ausgestaltungen der Erfindung ergeben sich aus weiteren Unteransprüchen, der nachfolgenden Beschreibung und der Zeichnung. In der Zeichnung zeigen;
- Fig. 1: in perspektivischer Darstellung ein Ausführungsbeispiel einer Seitenwan- dung eines Fahrzeugaufbaus nach der Erfindung mit einer Anzahl von ne- beneinander angeordneten Wandungsteilen mit eingebrachten Ladungsbe- festigungsschienen (Zurrschienen) in den Wandbereich eines isolierte Fahrzeugaufbaus,
- Fig. 2: ausschnittsweise in perspektivischer Darstellung den Verbindungsbereich einander benachbarter Wandungsteile,
- Fig. 3: ausschnittsweise zwei benachbarte Wandungsteile mit über die Verbin- dungsbereiche verformte Aufnahmen zur Anordnung von Zurrschieneele- menten, und
- Fg. 4: das Ausführungsbeispiel nach Fig. 3 mit flächenbündig mit der Innenwan- dung der Wandungsteile eingesetzten Zurrschienen.

In der Zeichnung sind grundsätzlich gleichwirkende Teile mit übereinstimmenden Bezugsziffern versehen.

Nicht dargestellt ist der gesamte Fahrzeugaufbau. Es soll sich hierbei um ein Fahrzeugaufbau für Kühlfahrzeuge handeln mit einer Innen- und Außenwandung (Innen- und Außen-Deckschicht) mit dazwischen liegendem Dämmaterial.

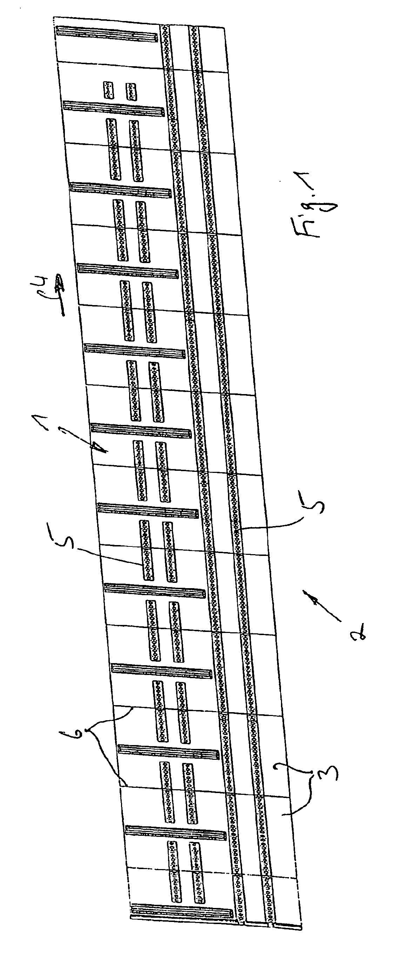

In Fig. 1 ist die dem Laderaum zugewandte Wandungsebene 1 einer Seitenwandung 2 veranschaulicht, die eine Anzahl von miteinander verbundenen metallischen Wandungsteilen 3 hat, deren Längserstreckung sich im wesentlichen vertikal, also senkrecht zur späteren Fahrtrichtung 4 des Fahrzeuges erstreckt. In diese Seitenwandungen sind, wie noch näher erläutert werden wird, Zurrschienen 5 eingelassen, die sich über den Verbindungsbereich 6 einander benachbarter Wandungsteile 3 erstrecken.

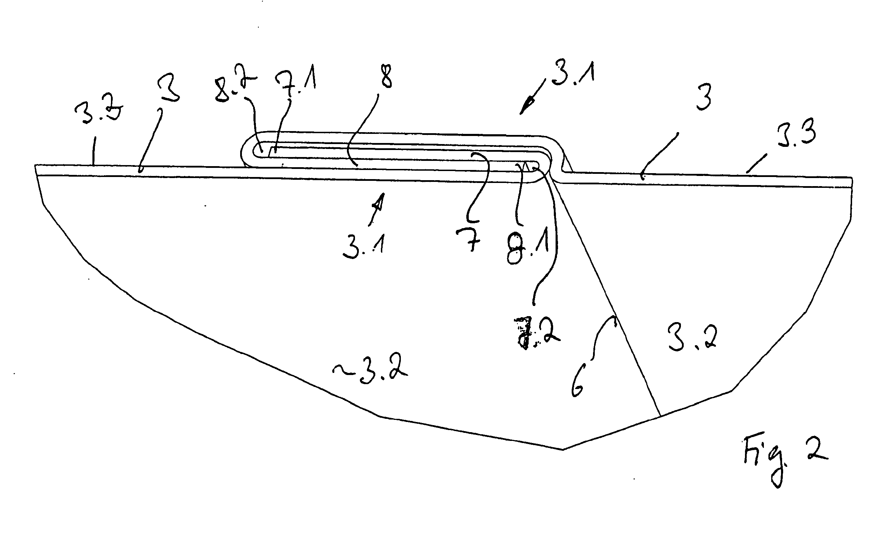

Wie näher aus Fig. 2 hervorgeht, haben die Wandungen gefalzte Seitenrandbereiche 3.1. Die einander benachbarten Wandungsteile haben gegensinnig abgewinkelte Seitenrandbereiche 7 und 8, wobei die abgewinkelten Enden 7.1 und 8.1 der Seitenrandbereiche jeweils wechselseitig klammerartig in die so gebildete jeweilige Aufnahmetasche 7.2 und 8.2 greift. Um zum Laderauminneren eine flächenbündige Deckschicht zu haben, sind die Falzungen des Verbindungsbereiches 6 mit den abgewinkelten Enden 7 und 8 und den Aufnahmetaschen 7.2 und 7.3 derart vorgesehen, daß die Wandungsebenen im wesentlichen flächenbündig verlaufen. Daher ist die in Fig. 2 ersichtliche Aufnahmetasche 8.2 des rechten Wandungsteils derart geformt, daß sich diese oberhalb einer Wandungsteilebene 3.3 des in Fig. 2 ersichtlichen linken Wandungsteils 3 erstreckt, was die Wandungsebene 3.3 ist, die im fertigen Zustand dem Dämmaterial zugewandt ist. Die andere Wandungsteilebene 3.2 des anderen Wandungsteils 3 (rechtes Wandungsteil in Fig. 2) reicht in etwa bis an die benachbarte Wandungsebene 3.2 des benachbarten linken Wandungsteils 3, was die Wandungsebene ist, die dem Laderaum zugewandt ist.

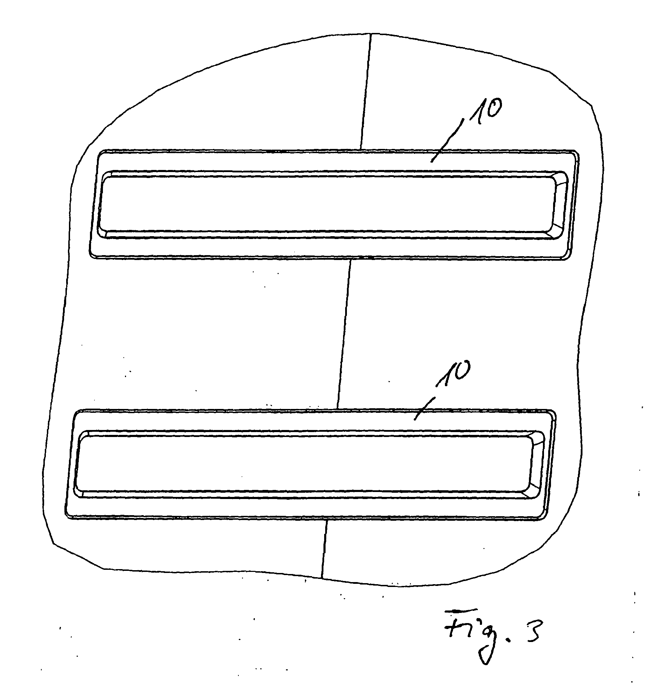

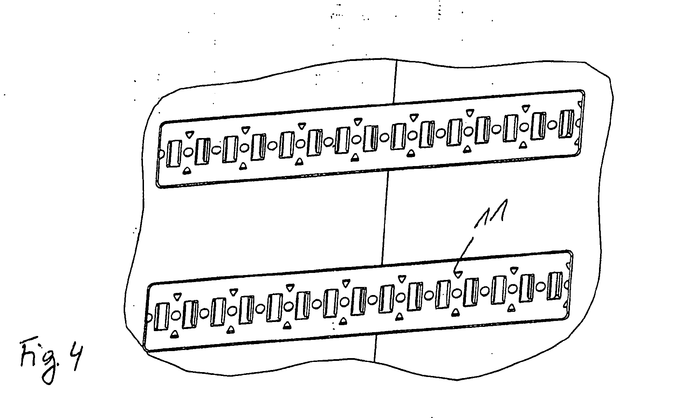

Wie aus Fig. 2 ersichtlich ist, ist der Verbindungsbereich außerordentlich flach und beinhaltet keinerlei spitze Kanten oder Ecken, die Dämmmaterial beschädigen könnten. In die jeweiligen Aufnahmetaschen 8.2 und 7.2 ist eine Klebermasse bzw. eine Dichtungsmasse eingefüllt (nicht im einzelnen dargestellt), so daß die Enden 8.1 und 7.1 insgesamt eingebettet sind in diese Klebermasse und Dichtmasse, so daß eine außerordentlich hochfesten Verbindung der benachbarten Wandungsteile vorliegt. Aufgrund der flachen Bauweise und auch der hochfesten Verbindung ist es dabei möglich, daß Ausformungen 10, wie in Fig. 3 dargestellt, sich über den Verbindungsbereich 6 erstrecken und die Wandungsteile mitsamt ihren Verbindungen dort so verformt werden, daß in die Ausformungen 10 Zurrschienenelemente 11, wie in Fig. 4 dargestellt, flächenbündig mit der (inneren) Wandungsebene 3.2 eingesetzt werden können.

## Patentansprüche

1. Fahrzeugaufbau für beispielsweise Kühlfahrzeuge mit einem von Wandungen (1), einem Dach und einem Boden umgrenzten Laderaum, wobei die Wandungen (1) mehrere metallische, miteinander verbundene Wandungsteile (3) umfassen, die gefalzte Seitenrandbereiche zur Verbindung von benachbarten Wandungsteilen umfassen und wobei einander benachbarte Wandungsteile (3) gegensinnig abgewinkelte, Aufnahmetaschen (7.2, 8.2) bildende Seitenrandbereiche (7, 8) haben, die abgewinkelten Enden (7.1, 8.1) der Seitenrandbereiche (7, 8) jeweils wechselseitig klammerartig in die jeweilige Aufnahmetasche (7.2, 8.2) des anderen Wandungsteils (3) greifen, die Aufnahmetasche (8.2) mitsamt dem abgewinkelten Ende (8) eines Wandungsteils (3) sich oberhalb einer Wandungsteilebene (3.3) des anderen Wandungsteils (3) aber parallel zu dieser erstreckt und die andere Wandungsteilebene (3.2) des anderen Wandungsteils (3) in etwa bis an die benachbarte Wandungsebene (3.3) des benachbarten Wandungsteils (3) reicht, **dadurch gekennzeichnet, dass** einander benachbarte Wandungsteile (3) zur Anordnung von Laderaumbefestigungselementen wie Zurrschienen (5, 11) in einem die abgewinkelten Enden (7.1, 8.1) der Seitenrandbereiche (7, 8) und die Aufnahmetaschen (7.2, 8.2) umfassenden Wandungsbereich derart verformt sind, dass die Ladungsbefestigungselemente im wesentlichen flächenbündig zu der dem Laderaum zugewandten Wandungsebene (3.2) der Wandungsteile (3) verlaufen.

2. Fahrzeugaufbau nach Anspruch 1, **dadurch gekennzeichnet, dass** in die Aufnahmetaschen (7.2, 8.2) der ineinander greifenden benachbarten Wandungsteile (3) eine Klebermasse eingefüllt ist.

3. Fahrzeugaufbau nach Anspruch 1, **dadurch gekennzeichnet, dass** in die Aufnahmetauschen (7.2, 8.2) der ineinander greifenden benachbarten Wandungsteile (3) eine Dichtungsmasse eingefüllt ist.

4. Fahrzeugaufbau nach einem der Ansprüche 1 bis 3, **dadurch gekennzeichnet, dass** aneinander befestigte Wandungsteile (3) mit einem Dämmmaterial derart hinterlegt sind, dass die oberhalb einer Wandungsebene angeordneten Aufnahmetaschen (8.2) innerhalb des Dämmmaterials angeordnet sind.

## Claims

1. Body, for refrigerated vehicles for example, having a load-carrying space bounded by walls (1), a roof and a floor, with the walls (1) comprising a plurality of metallic wall parts (3) which are connected together and which comprise folded lateral edge-regions for connecting adjacent wall parts together, and with mutually adjacent wall parts (3) having lateral edge-regions (7, 8) which are folded over in opposite directions and which form receiving pockets (7.2, 8.2), the alternating folded-over ends (7.1, 8.1) of the lateral edge-regions (7, 8) fitting, at each connection, by a clip-like action, into the receiving pocket (7.2, 8.2) of whichever is the other wall part (3), the receiving pocket (8.2) plus the folded-over end (8) of one wall part (3) extending above one plane (3.3) of the other wall part (3) but parallel thereto and the other plane (3.2) of the other wall part (3) reaching approximately to the adjacent plane (3.3) of the adjacent wall part (3), **characterised in that**, to allow members for fastenings for the load-carrying space, such as rails for lashings (5, 11), to be placed in position, adjacent wall parts (3) are so shaped, in a region comprising the folded-over ends (7.1, 8.1) of the lateral edge-regions (7, 8) and the receiving pockets (7.2, 8.2), that the members for fastening loads in place extend with their surfaces substantially flush with that plane (3.2) of the wall parts (3) which is adjacent the load-carrying space.

2. Body according to claim 1, **characterised in that** the receiving pockets (7.2, 8.2) of the adjacent wall parts (3) which fit into one another are filled with an adhesive substance.

3. Body according to claim 1, **characterised in that** the receiving pockets (7.2, 8.2) of the adjacent wall parts (3) which fit into one another are filled with a sealing substance.

4. Body according to one of claims 1 to 3, **characterised in that** wall parts (3) which are fastened to one another are backed with an insulating material in such a way that the receiving pockets (8.2) which are arranged above a plane of the wall are arranged within the insulation material.

## Revendications

1. Caisse de véhicule par exemple pour véhicules frigorifiques comprenant un espace de chargement délimité par des parois (1), un toit et un fond, les parois (1) comprenant plusieurs parties de paroi métalliques (3) reliées les unes aux autres et comportant des zones de bord latéral pliées destinées à relier les parties de paroi adjacentes, et des parties de paroi (3) adjacentes les unes aux autres présentant des zones de bord latéral (7, 8) coudées en sens inverse et formant des poches de réception (7.2, 8.2) et les extrémités coudées (7.1, 8.1) des zones de bord latéral (7.8) s'insérant respectivement mutuellement à la façon d'un étrier dans la poche de réception (7.8, 8.2) respective de la partie de paroi inférieure (3), la poche de réception (8.2) comprenant l'angle coudé (8) d'une partie de paroi (3) s'étendant au-dessus d'un plan de partie de paroi (3.3) de l'autre partie de paroi (3) mais parallèlement à celui-ci et l'autre plan de partie de paroi (3.2) de l'autre partie de paroi (3) atteignant environ jusqu'au plan de paroi adjacent (3.3) de la partie de paroi adjacente (3), **caractérisée en ce que** les parties de paroi (3) adjacentes les unes aux autres destinées à disposer des éléments de fixation d'espace de chargement comme des rails d'arrimage (5, 11) dans une zone de paroi comportant les extrémités coudées (7.1, 8.1) des zones de bord latéral (7, 8) et les poches de réception (7.2, 8.2) sont déformées de telle sorte que les éléments de fixation de chargement s'étendent sensiblement au même niveau que la surface en direction du plan de paroi (3.2) des parties de paroi (3) orienté vers l'espace de chargement.

2. Caisse de véhicule selon la revendication 1, **caractérisée en ce qu'**une pâte adhésive est versée dans les poches de réception (7.2, 8.2) des parties de paroi adjacentes (3) s'emboîtant les unes dans les autres.

3. Caisse de véhicule selon la revendication 1, **caractérisée en ce qu'**une pâte d'étanchéité est versée dans les poches de réception (7.2, 8.2) des parties de paroi (3) adjacentes s'emboîtant les unes dans les autres.

4. Caisse de véhicule selon l'une quelconque des revendications 1 à 3, **caractérisée en ce que** les parties de paroi (3) fixées les unes aux autres et comprenant un matériau isolant sont déposées de telle sorte que les poches de réception (8.2) disposées au-dessus d'un plan de paroi sont disposées à l'intérieur du matériau isolant.
